# FASCICULE DE BREVET EUROPEEN

(11) **EP 0 374 828 B1**
(45) Date de publication et mention de la délivrance du brevet: **27.04.1994**
(21) Numéro de dépôt: 89123452.8
(22) Date de dépôt: 19.12.1989
(51) Int. Cl.: H04M 11/06, H04M 1/57

(54) **Agencement de raccordement téléphonique pour ordinateur individuel et dispositif pour un tel agencement**
Fernsprech-Anschlussanordnung für einen Personal-Computer und eine Einrichtung dafür
Telephone connecting arrangement for a personal computer, and apparatus therefor

(30) Priorité: 23.12.1988 FR 8817101
(43) Date de publication de la demande: 27.06.1990
(73) Titulaire: ALCATEL BUSINESS SYSTEMS, F-75008 Paris (FR)
(72) Inventeur: Lecomte, Daniel, F-75116 Paris (FR); Galopin, Norbert, F-95110 Sannois (FR); Lemaistre, Jacques, F-95100 Argenteuil (FR)
(74) Mandataire: Weinmiller, Jürgen

(56) Documents cités:
- EP-A- 0 238 255
- FR-A- 2 452 842
- FR-A- 2 472 319
- AT & T TECHNOLOGY, vol. 1, no.1, 1986, pages 36-37, Short Hills, US; L.K. PEDERSON et al.: "The PC/PBX connection"

## Description

L'invention concerne, les agencements destinés à permettre le raccordement d'un ordinateur individuel, par exemple personnel, à un réseau téléphonique, elle se rapporte également à un dispositif de raccordement pour de tels agencements.

Le raccordement des ordinateurs individuels au réseau téléphonique s'est initialement effectué par l'intermédiaire de coupleurs téléphoniques qui venaient se raccorder au niveau du combiné d'un poste ou d'un modem associé à un poste et permettaient la transmission de données dans la bande téléphonique entre l'ordinateur et un équipement informatique compatible distant, via un appareillage téléphonique intégré ou non à cet équipement informatique, après qu'une liaison téléphonique eut été établie au moyen du poste avec l'appareillage téléphonique de cet équipement informatique distant. Une telle solution n'est toutefois pas très satisfaisante notamment dans la mesure où l'utilisateur doit alternativement intervenir sur le poste puis sur l'ordinateur au cours de l'établissement, du déroulement et de l'achèvement d'une transmission par l'intermédiaire du réseau téléphonique et où ceci augmente les risques de fausses manoeuvres.

Aussi actuellement le raccordement d'un ordinateur individuel à un réseau téléphonique public ou privé s'effectue plutôt par l'intermédiaire d'une carte de circuit que l'on vient raccorder à un connecteur d'extension comporté par l'ordinateur pour d'éventuelles adaptations. Une telle carte de circuit assure les fonctions téléphoniques habituellement remplies tant par les postes téléphoniques des abonnés que par les abonnés eux-mêmes, par exemple la détection d'appel comme un poste ou encore la numérotation comme un abonné.

L'un des inconvénients d'un tel arrangement est d'occuper à lui seul un connecteur d'extension de l'ordinateur alors que le nombre de ces connecteurs est souvent insuffisant.

De plus, le raccordement de l'ordinateur à une ligne téléphonique s'effectue dans ce cas, soit en parallèle à un poste téléphonique qui est temporairement mis hors-service lorsque l'ordinateur utilise la ligne, soit à la place d'un poste téléphonique, la ligne téléphonique étant alors réservée au seul profit de l'ordinateur.

Un dispositif de raccordement ne nécessitant pas de carte de circuit dans l'ordinateur, est divulgué dans l'article "The PC/PBX Connection", L.K. Pederson et al., AT & T Technology, vol. 1, no. 1, 1986, pages 36 et 37.

La présente invention propose aussi un dispositif destiné à permettre le raccordement d'un ordinateur individuel à un réseau téléphonique par l'intermédiaire d'un commutateur numérique, notamment privé auquel il est raccordé, via un poste téléphonique ou terminal d'abonné apte à traiter la signalisation téléphonique et permettant un transfert simultané de signaux numériques de voix et de données, qui est contrôlé par un processeur interne d'une logique de gestion et qui comporte à cet effet une interface de transmission de données pour le raccordement d'un appareillage informatique externe, tel qu'un autre ordinateur.

Selon une caractéristique de l'invention, le dispositif comporte un coupleur, intégré dans le poste téléphonique et relié au processeur de ce dernier, qui est muni de moyens pour dériver, vers un accès externe de bus d'ordinateur individuel, la signalisation téléphonique transmise vers le poste et de moyens pour substituer à volonté à la signalisation que devrait transmettre ce poste vers le commutateur, une signalisation correspondante produite par l'ordinateur individuel, les transmissions de données qui transitent vers et à partir de l'ordinateur individuel s'effectuant séparément par l'intermédiaire de l'interface de transmission. De plus l'ordinateur individuel comporte des moyens uniquement logiciels pour produire la signalisation téléphonique de substitution qui transite par les circuits du poste téléphonique également empruntés pour la signalisation téléphonique émanant du processeur interne de ce poste.

L'invention, ses caractéristiques et ses avantages sont précisés dans la description qui suit en liaison avec les figures évoquées ci-dessous :
- La figure 1 présente le schéma de principe d'un agencement de raccordement, selon l'invention, d'un ordinateur individuel à un réseau téléphonique, via un poste téléphonique numérique.
- La figure 2 présente me schéma d'un agencement comportant un dispositif de raccordement selon l'invention.

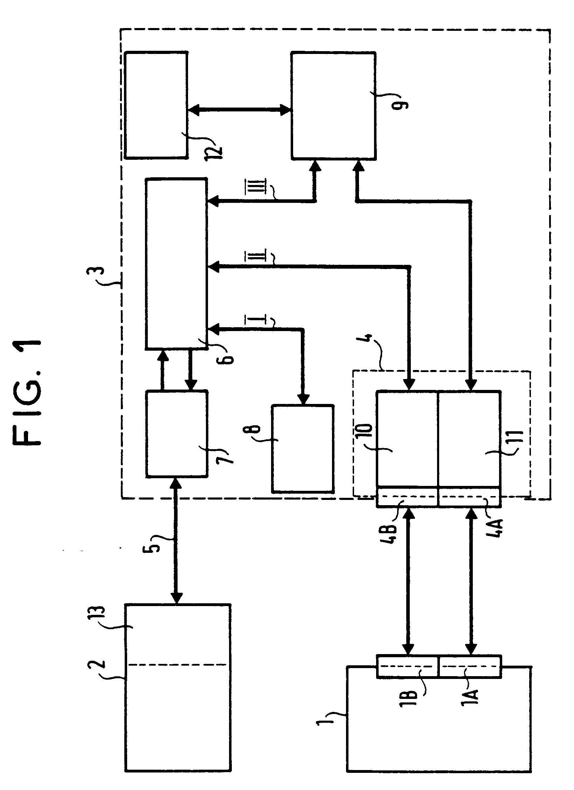

L'agencement de raccordement présenté en figure 1 est destiné à permettre la mise en liaison d'un ordinateur 1, de type dit individuel ou personnel, à tout équipement compatible par l'intermédiaire d'un réseau téléphonique 2 auquel l'ordinateur vient se raccorder au travers d'un poste téléphonique numérique 3 qui est muni d'un coupleur approprié 4 et que l'on relie par une ligne 5 à un commutateur 13 intégré ou raccordé au réseau 2.

L'ordinateur 1 est un appareil de type usuel par exemple un modèle PC tel que commercialisé par la société IBM ou un modèle concurrent par exemple de la société APPLE. Un tel ordinateur est doté de connecteurs permettant son raccordement à des appareillages externes, notamment un connecteur 1A d'accès à un bus interne de communication avec le ou les processeurs de l'ordinateur et avec leurs mémoires.

Un second connecteur 1B est classiquement prévu pour permettre des échanges de données numériques entre l'ordinateur et un appareillage extérieur, par l'intermédiaire d'une interface normalisée, c'est par exemple un connecteur normalisé de type RS 232 C ou d'interface normalisée de jonction asynchrone, dite V24.

Le réseau téléphonique 2 est un réseau permettant le transfert de signaux numériques de voix et de données, c'est par exemple un réseau numerique temporel de type E10B ou MT20 de la société ALCATEL CIT, auquel l'ordinateur 1 se raccorde via un poste téléphonique numérique lui-même raccordé au réseau 2 par un commutateur numérique 13 de type privé ; c'est éventuellement un réseau numérique à intégration de services, dit RNIS, auquel l'ordinateur 1 se raccorde via un poste téléphonique terminal apte à se raccorder au point de référence normalisé dit S, soit directement soit via un adaptateur de terminal, et à supporter le protocole normalisé de liaison de données, dit LAPD.

Les caractéristiques fondamentales des réseaux RNIS, définis à partir des recommandations du comité consultatif international pour le télégraphe et le téléphone (CCITT) ne seront pas précisés ici dans la mesure où elles sont décrites dans le nombreuses publications et par exemple dans l'ouvrage "le RNIS, techniques et atouts" publiés en France en 1987 dans la collection technique et scientifique des télécommunications par un collectif s'intitulant G. DICENET.

Les caractéristiques d'un poste téléphonique numérique 3 destiné à être relié à un commutateur numérique 13, ici un autocommutateur, et celles de ce dernier sont par exemple évoqués dans l'article "L'autocommutateur multiservice OPUS 4000" publié pa M. BAUDOIN, LE, MEJANE, SEVEQUE et ANIZAN dans le n^{o} 4, paru en 1985, de la revue "Commutation et Transmission".

Le poste téléphonique numérique 3 est raccordé au réseau téléphonique 2, au travers d'un commutateur 13 de type privé, via une liaison bidirectionnelle 5 à une ou deux paires de fils permettant de transmettre simultanément des signaux numériques de voix ou son et de données de manière asynchrone avec un débit correspondant par exemple à 4800 baud/s dans un cas et 19200 baud/s dans l'autre cas. Comme indiqué plus haut, on englobe dans le terme terminal d'abonné tout appareil qui est directement connectable à une liaison téléphonique et qui est capables de traiter la signalisation en ligne comme un poste téléphonique usuel.

A cet effet, le poste téléphonique numérique 3 est relié à la liaison 5 par un multiplexeur-démultiplexeur 6 connecté à cette liaison au travers d'une interface de ligne 7.

L'interface de ligne 7, de type classique, traite le niveau physique de la liaison numérique, elle permet principalement la transmission et la modulation/démodulation des signaux impulsionnels constituant les données tout en assurant une séparation pour les courants continus entre liaison 5 et le poste téléphonique numérique 3, classiquement au moyen d'au moins un transformateur non représenté.

Le multiplexeur-démultiplexeur 6 d'une part assemble d'autre part sépare les signaux échangés par l'intermédiaire de la liaison 5, ceux-ci sont associés par exemple à trois canaux bidirectionnels l'un de 8 kbit/s pour la signalisation transitant par la liaison 5, l'autre de 8 kbit/s pour des données et un dernier de soixante quatre kbit/s pour des échanges de signaux de voix ou de données.

Le multiplexeur-démultiplexeur 6 est relié par une liaison I à un module audio fréquence 8 qui assure la conversion des signaux sonores sous forme numérique et l'opération inverse au moyen d'un cofidec non représenté. Ce cofidec est relié à des transducteurs sonores de type microphone, écouteur ou haut-parleur du poste par l'intermédiaire de circuits adaptateurs appropriés, il assure d'une part le codage numérique sous forme d'échantillons MIC des signaux sonores reçus par le poste, d'autre part la conversion des échantillons MIC reçus, via la liaison 5 en signaux électriques pour les transducteurs sonores.

Le multiplexeur-démultiplexeur 6 est aussi relié par une liaison bidirectionnelle III à une logique de gestion 9 généralement organisée autour d'un processeur et de mémoires associées avec laquelle il échange des données de signalisation liées à l'exploitation du poste en établissant à cet effet un dialogue entre le poste et l'autocommutateur auquel il est rattaché.

Le multiplexeur-démultiplexeur 6 est encore relié à un connecteur 4B par une liaison bidirectionnelle II, via une interface de transmission de données constituée par un convertisseur de débit 10 du coupleur 4 qui permet au poste 3 de servir d'intermédiaire entre un appareil externe, tel l'ordinateur 1 et le réseau téléphonique auquel lui-même est relié. Dans une forme classique de réalisation, le connecteur 4B est de type RS232C et il permet de transférer les signaux alphanumériques asynchrones émis par l'ordinateur 1, via le connecteur complémentaire 1B qui garnit l'un des ports de cet ordinateur, ainsi que les signaux émis vers l'ordinateur 1 par un appareillage informatique, identique ou complémentaire et/ou compatible, par exemple un serveur non figuré, au travers du réseau téléphonique numérique 2 auquel cet appareillage informatique est raccordé ou dont éventuellement il fait parti.

Selon l'invention, le raccordement de l'ordinateur 1 au réseau téléphonique numérique 2 est complété par un auxiliaire de signalisation 11 intégré au coupleur 4 et accessible de l'extérieur du poste téléphonique numérique 3 au travers d'un connecteur 4A complémentaire du connecteur 1A que comporte le port d'extension de bus de l'ordinateur 1. Ceci permet des échanges directs de signalisation entre l'ordinateur 1 dûment programmé et l'autocommutateur de rattachement du poste 3 dans le réseau téléphonique 2, l'ordinateur 1 se substituant alors temporairement à la logique de gestion 9 du poste.

Dans une forme d'exploitation, les différentes fonctions assurées par l'interface homme-machine 12 du poste téléphonique numérique 3, c'est-à-dire les fonctions liées au clavier et aux afficheurs sont susceptibles d'être reprises au niveau de l'ordinateur 1 dont le clavier, l'écran et d'éventuels accessoires complémentaires non figurés dupliquent ou se substituent aux organes et accessoires éventuels du poste.

Ceci permet d'augmenter d'une part les possibilités du poste téléphonique numérique 3 en lui adjoignant des possibilités propres à l'ordinateur, tels un écran de grande dimension et à haute définition, un clavier alphabétique, une souris, d'importantes possibilités de mémorisation et de traitement, d'autre part celles de l'ordinateur 2 en lui permettant de se substituer au poste en n'exigeant que des modifications ou adjonctions logicielles.

Il devient alors possible de réaliser des fonctions téléphoniques évoluées telles que :
- la transcription en clair de tous les services habituellement accessibles en composant un préfixe,
- la composition d'un annuaire individuel,
- la consultation d'un annuaire du commutateur,
- la numérotation à partir de ces annuaires,
- la représentation graphique du poste et l'accès aux fonctions par déplacement d'une souris,
- la transformation du calculateur en une station de travail voix et données simultanées,
- l'utilisation efficace des messageries vocales et écrites,
- la réalisation d'une messagerie télématique privée fonctionnant en répondeur,
- la composition d'une liste des appels restés sans réponse avec le nom du correspondant appelant.

Le poste téléphonique constitue alors un accessoire directement manoeuvrable par l'ordinateur au moyen des commandes habituelles de ce dernier, en raison de sa connexion par l'intermédiaire du coupleur 4. Il peut par exemple être représenté directement sur un écran de l'ordinateur 1 et le cliquage à l'aide d'une souris, des touches représentées est susceptible de déclencher les commandes correspondantes.

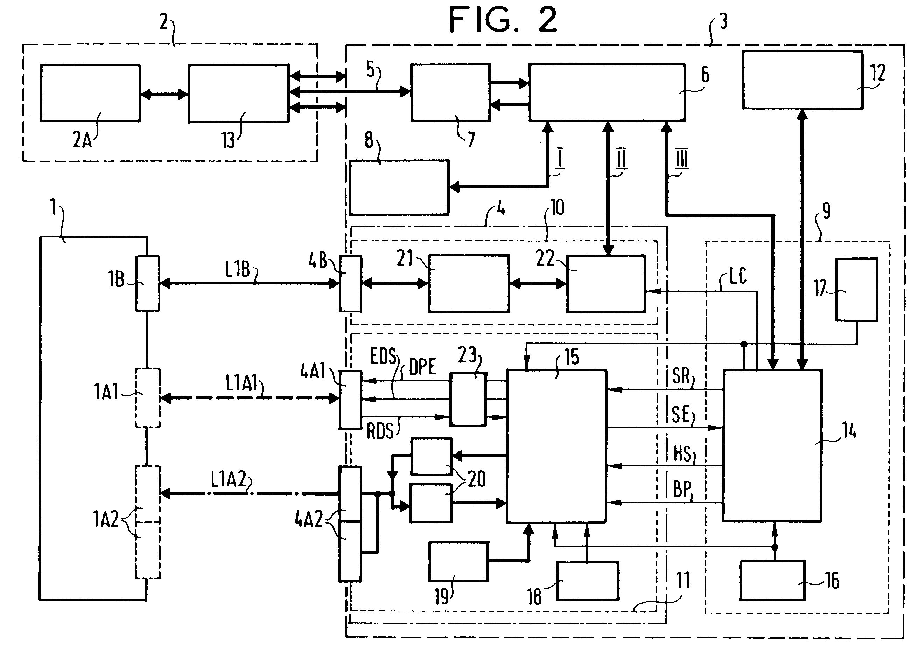

L'exemple d'agencement de raccordement détaillé en figure 2 montre essentiellement l'adjonction faite à un poste téléphonique numérique 3 au niveau de son coupleur 4 pour la desserte d'un ordinateur individuel 1.

Le poste téléphonique numérique 3 est ici montré relié par une liaison 5, telle qu'évoquée plus haut, à un autocommutateur numérique 13, le plus souvent privé et par exemple du type précédemment mentionné. Cet autocommutateur 13 est lui-même présenté rattaché à un réseau multiservice 2A tel qu'évoqué plus haut.

Le poste téléphonique numérique 3, qui comporte les éléments 6, 7, 8, 9, 10, 11 et 12 précédemment évoqués est destiné à permettre le raccordement d'un ordinateur 1 en série ou en parallèle suivant la procédure d'extension prévue pour cet ordinateur.

A cet effet, ce poste téléphonique numérique 3, qui est classiquement doté d'un connecteur 4B d'interface V24 ou RS 232C pour raccordement à un port d'équipement informatique ou périinformatique doté d'un connecteur complémentaire, comporte aussi au moins un autre connecteur de raccordement à un port d'extension de bus d'ordinateur.

Dans l'exemple proposé, le poste téléphonique numérique 3 comporte un premier connecteur de bus 4A1, par exemple de type RS 232C ou pour interface V24 permettant un raccordement du poste sur le bus de l'ordinateur 1 éventuellement en parallèle avec d'autres périphériques selon une structure de type étoile.

Deux autres connecteurs 4A2, correspondant respectivement par exemple à deux prises ADB pour ordinateur et périphériques APPLE permettent une mise en série du poste sur le bus de l'ordinateur 1 avec éventuellement d'autres périphériques non représentés de ce dernier, par exemple le clavier de cet ordinateur et/ou une souris, etc.

Le poste téléphonique numérique 3 permet alternativement le raccordement d'un ordinateur 1 par une liaison L1B, entre connecteurs 1B et 4B, pour les échanges des données et par une liaison L1A1, entre connecteurs 1A1 et 4A1, pour les échanges de signalisation, ou d'autre part par l'intermédiaire de la liaison L1B pour les échanges de données et par une liaison à deux voies unidirectionnelles de sens inverse L1A2 pour respectivement la réception et l'émission de la signalisation au niveau de l'ordinateur 1 et suivant les possibilités offertes par cet ordinateur.

La liaison L1B vient pratiquement se raccorder à la liaison II via le convertisseur de débit 10 qui associe ici un ensemble translateur 21 à un module convertisseur 22. L'ensemble translateur 21 est classique et assure la mise à niveau électrique des signaux échangés entre l'ordinateur 1 et le multiplexeur-démultiplexeur 6 via la liaison II. Le module convertisseur 22 qui assure de manière usuelle les adaptations de débit est configuré à cet effet par la logique de gestion 14, comme le symbolise la liaison LC.

Les connecteurs 4A1, 4A2 du poste terminal 3 sont pratiquement reliés à la liaison III en parallèle avec le processeur 14 de la logique de gestion 9 par un processeur complémentaire 15 qui est placé dans le coupleur 4 et qui se présente par exemple sous forme d'un module détaché, notamment une carte fille, indépendamment insérable dans le poste terminal numérique.

Les processeurs 14 et 15 dont les mémoires associées ne sont pas figurées, sont reliés entre eux par deux liaisons unidirectionnelles SE et SR permettant leur mise en parallèle sur la liaison III. Le processeur 15 se substitue au processeur 14 pour envoyer vers l'ordinateur 1 les données de signalisation pour exploitation par ce dernier.

Le processeur 15, qui est par exemple un processeur 4 bits compatible avec le processeur 14, est essentiellement chargé d'assurer la conversion des données reçues, au travers de la liaison 5 dans le canal de signalisation à 8 kbit/s, en données susceptibles d'être acceptées par l'ordinateur 1 après avoir été conformées de manière à pouvoir transiter par l'un ou l'autre des connecteurs 4A1 ou 4A2, ainsi que la conversion des données de signalisation transitant en sens inverse qui sont engendrées par l'ordinateur 1 agissant à la place du poste.

Le processeur 15 reçoit les signaux d'horloge fonctionnelle que produit une horloge à quartz 16 pour le processeur 14 et des signaux de synchronisation HS pour ses émissions et réceptions de données sur la liaison 5, ces signaux de synchronisation sont ceux que reçoit le processeur 14 lorsque la liaison ordinateur 1 - réseau 2 n'est pas en service.

Dans l'exemple de réalisation proposé, une liaison supplémentaire BP permet au processeur 14 du poste de signaler au processeur 15 de l'équipement d'extension que des données de signalisation à transmettre, via la liaison 5, dépassent la taille de la zone de mémoire vive du processeur 14 imparti à la mémorisation temporaire de ces données avant transmission, de manière à assurer un stockage de ces données en mémoire vive du processeur 15.

Un circuit de surveillance 17 assure une commande commune de remise à zéro des processeurs 14 et 15; cette commande est activée notamment lorsque le processeur 14 du poste ne fournit pas d'impulsion attestant régulièrement de son bon fonctionnement au circuit de surveillance. Ce dernier est ici organisé autour d'un circuit de type RC à constante de temps déterminée.

Le processeur 15 est susceptible d'être relié d'une part par le connecteur 4A1 d'autre part par le connecteur 4A2 au bus d'un ordinateur 1 agencé à cet effet. Un agencement de validation 18 de type bouton, commutateur ou cavalier permet de configurer le poste téléphonique numérique 3 en fonction du type de raccordement imposé par l'ordinateur. Il est bien entendu envisageable de prévoir un agencement de validation de type logiciel introduit au niveau du poste téléphonique numérique 3, de l'ordinateur 1 ou encore une téléaction d'un poste téléphonique numérique de configuration d'une installation organisée autour d'un autocommutateur privé, en particulier un poste téléphonique numérique d'opératrice ou d'installateur.

Un agencement d'adressage 19 préférablement modifiable est également incorporé à l'équipement d'extension 11 pour permettre d'attribuer une adresse individuelle ou poste téléphonique numérique 3 dans la suite des équipements lorsque ce poste est relié en série au bus de l'ordinateur 1 avec d'autres équipements périphériques de cet ordinateur.

La signalisation destinée à être transmise par une liaison 5 du réseau 2 vers l'ordinateur 1, au travers d'une interface V24 ou d'une liaison RS232C, est envoyée au travers d'un translateur 23 via le connecteur 4A1. Elle transite par une liaison EDS d'émission vers le processeur 15. Une liaison d'autorisation d'émission DPE asservit les émissions de l'ordinateur 1 vers le processeur 15 aux instants affectés à de telles émissions ; ces instants sont obtenus à partir des signaux d'horloge AS, récupérés des signaux émis vers le poste 3, via la liaison 5, selon une technique classique qui ne sera pas rappelée ici car sans rapport direct avec l'invention. Une liaison RDS permet l'envoi des caractères ou données de signalisation de l'ordinateur 1 vers le poste 3.

Alternativement, le raccordement série du poste téléphonique numérique 3 à l'ordinateur peut s'effectuer par la liaison L1A2 pour les données de signalisation, des coupleurs 20 par exemple des coupleurs photoélectriques, assurent alors une séparation électrique.

Lorsqu'un ordinateur 1 est connecté à un poste téléphonique numérique 3 rattaché à un commutateur numérique 13 d'un réseau téléphonique 2, il est possible d'établir une communication au travers de l'autocommutateur à partir du poste et/ou de l'ordinateur, les données de signalisation et notamment de numérotation étant produites par l'un où l'autre, dûment programmés à cet effet.

De même les caractères alphanumériques transmis de l'un ou de l'autre, via la liaison 5 ou par celle-ci, vers l'un ou l'autre sont récupérés par l'un et/ou l'autre à partir du moment où ils sont susceptible d'y être exploités. Ceci entraîne en particulier l'affichage des caractères alphanumériques reçus pour des besoins de signalisation tant sur le ou les afficheurs du poste constitués par exemple d'un écran et/ou de voyants, que sur l'écran de l'ordinateur 1 qui présente par exemple dans ce cas une reproduction activable de l'interface homme-machine du poste selon des procédés connus dans ce domaine.

## Revendications

1. Agencement de raccordement d'un ordinateur individuel (1) à un réseau téléphonique (2) par l'intermédiaire d'un commutateur numérique, notamment privé (13), via un poste téléphonique (3) ou terminal d'abonné apte à traiter la signalisation téléphonique, qui permet un transfert simultané de signaux numériques de voix et de données, qui est contrôlé par un processeur interne (14) d'une logique de gestion (9) et qui comporte des moyens (10) de transmission de données pour le raccordement d'un appareillage informatique, tel qu'un ordinateur, caractérisé en ce qu'il comporte un coupleur (4) intégré dans le poste téléphonique et relié à la logique de gestion (9) de ce dernier qui est muni de moyens pour dériver, vers un accès externe (1A) de bus de l'ordinateur individuel, la signalisation téléphonique transmise vers la logique de gestion du poste et de moyens pour substituer à volonté à la signalisation téléphonique que devrait transmettre le poste vers le commutateur, une signalisation correspondante produite par l'ordinateur individuel, les transmissions de données qui transitent vers et à partir de cet ordinateur individuel s'effectuant séparément par l'intermédiaire desdits moyens de transmission de données, et en ce que l'ordinateur individuel comporte des moyens uniquement logiciels pour produire la signalisation téléphonique de substitution, cette dernière transitant par les circuits du poste téléphonique également empruntés par la signalisation téléphonique émanant du processeur interne de ce poste.

2. Agencement de raccordement selon la revendication 1 caractérisé en ce que le poste téléphonique (3) dont la logique de gestion (9) est organisée autour d'un processeur (14) et de ses mémoires, comporte un auxiliaire de signalisation (11) organisé autour d'un processeur complémentaire (15) apte à assurer les échanges de signalisation téléphonique entre le poste (3) et l'ordinateur (1) et relié à cet effet d'une part à au moins un connecteur de bus (4A1 ou 4A2) d'ordinateur, d'autre part au processeur (14) de la logique de gestion du poste pour le transit de la signalisation.

3. Agencement de raccordement selon au moins l'une des revendications 1, 2, caractérisé en ce qu'il comporte un poste téléphonique (3) physiquement distinct de l'ordinateur (1) qui est fonctionnellement incorporé à cet ordinateur en tant qu'accessoire directement manoeuvrable au moyen des commandes habituelles de cet ordinateur.

4. Dispositif pour le raccordement d'un ordinateur individuel (1) à un réseau téléphonique (2) par l'intermédiaire d'un commutateur numérique notamment privé (13) via un poste téléphonique (3) permettant un transfert simultané de signaux numériques de voix et de données qui est contrôlé par un processeur interne, le dit poste comportant des moyens de transmission de données (10, 4B) pour le raccordement d'un appareillage informatique tel qu'un ordinateur, caractérisé en ce qu'il comporte un coupleur (4), intégré dans le poste téléphonique et relié à la logique de gestion (9) de ce dernier, qui est muni de moyens pour dériver vers un accès externe (1A1 ou 1A2) de bus de l'ordinateur individuel la signalisation téléphonique transmise vers la logique de gestion du poste et de moyens pour substituer, à la signalisation téléphonique que devrait transmettre le poste vers commutateur, une signalisation correspondante produite par l'ordinateur individuel dûment programmé à cet effet, les transmissions de données vers et à partir dudit ordinateur qui transitent par l'autocommutateur s'effectuant séparément par l'intermédiaire des moyens de transmission de données (10, 4B).

5. Dispositif de raccordement selon la revendication 4, caractérisé en ce que le poste téléphonique, dont la logique de gestion (9) est organisée autour d'un processeur (14) et de ses mémoires, comporte un coupleur (4) associant un convertisseur de débit (10) desservi par un connecteur (4B) pour les transmissions de données avec l'ordinateur (1) et un auxiliaire de signalisation (11) organisé autour d'un processeur complémentaire (15) apte à assurer les échanges de signalisation téléphonique entre le poste (3) et l'ordinateur (1) et relié à cet effet d'une part à au moins un connecteur de bus (4A1 ou 4A2) d'ordinateur, d'autre part au processeur (14) de la logique de gestion du poste pour le transit de la signalisation.

6. Dispositif de raccordement selon la revendication 5, caractérisé en ce que le processeur complémentaire (15) de l'agencement de raccordement est relié en parallèle avec le processeur (14) du poste téléphonique à la ligne téléphonique (5) de ce poste, au travers d'un multiplexeur-démultiplexeur (6) commun et d'une interface de ligne (7) commune.

## Claims

1. An arrangement for connecting a personal computer (1) to a telephone network (2) via a digital exchange, in particular a private exchange (13), and via a telephone set (3) or subscriber terminal suitable for processing telephone signalling and enabling simultaneous transfer of voice and data digital signals, the telephone set or terminal being controlled by an internal processor (14) in a control logic circuit (9) and including data transmission means (10) for connection to a computer apparatus such as a computer, the arrangement being characterized in that it comprises a coupler (4) integrated in the telephone set and connected to the control logic circuit (9) thereof which is provided with means for diverting the telephone signal transmitted to the controlling logic circuit of the telephone towards an external access (1A) to the bus of the personal computer, and means for selectively replacing the telephone signal which the telephone would normally transmit to the exchange by corresponding signalling produced by the personal computer, the data transmissions which transit to and from the personal computer taking place separately via said data transmission means, and in that the personal computer includes purely software means for producing the replacement telephone signalling, said signalling transitting via the same circuits in the telephone set as are used by the telephone signalling coming from the internal processor of the telephone.

2. A connection arrangement according to claim 1, characterized in that the telephone set (3) whose controlling logic circuit (9) is organized about a processor (14) and its memories, includes a signalling auxiliary circuit (11) organized around an additional processor (15) suitable for interchanging telephone signalling between the telephone (3) and the computer (1) and connected for this purpose both to at least one computer bus connector (4A1 or 4A2) and to the processor (14) of the controlling logic circuit of the telephone for signalling transit purposes.

3. A connection arrangement according to claim 1 or 2, characterized in that it includes a telephone set (3) which is physically distinct from the computer (1) and which is functionally incorporated in the computer as an accessory which is directly controllable by means of the normal controls of the computer.

4. A device for connecting a personal computer (1) to a telephone network (2) via a telephone exchange, in particular a private exchange (13), and via a telephone set (3) enabling digital voice and data signals to be transferred simultaneously and controlled by an internal processor, said telephone including data transmission means (10, 4B) for connection to computer apparatus such as a computer, the device being characterized in that it comprises a coupler (4) integrated in the telephone set and connected to the controlling logic circuit (9) thereof, which logic circuit is provided with means for diverting the telephone signalling transmitted to the controlling logic circuit of the telephone set to an external access (1A1 or 1A2) to the bus of the personal computer, and means for replacing the telephone signalling which the telephone set would normally transmit to the exchange with corresponding signalling produced by the personal computer which is suitably programmed for this purpose, data transmission to and from said computer that transit via the exchange taking place separately via the data transmission means (10, 4B).

5. A connection device according to claim 4, characterized in that the telephone set whose controlling logic circuit (9) is organized about a processor (14) and its memories, includes a coupler (4) associating a data rate converter (10) served by a connector (4B) for data transmission with the computer (1), and a signalling auxiliary circuit (11) organized around an additional processor (15) suitable for interchanging telephone signalling between the telephone (3) and the computer (1) and connected for this purpose firstly to at least one computer bus connector (4A1 or 4A2) and secondly to the processor (14) of the telephone controlling logic circuit for signalling transit purposes.

6. A connection device according to claim 5, characterized in that the additional processor (15) of the connection arrangement is connected in parallel with the processor (14) of the telephone set to the telephone line (5) of said telephone, via a common multiplexer/demultiplexer (6) and a common line interface (7).

## Patentansprüche

1. Anordnung zum Anschließen eines individuellen Rechners (1) über eine digitale Vermittlungsanlage, insbesondere eine Nebenstellenanlage (13), an ein Telefonnetz (2) mit Hilfe eines Telefonapparats (3) oder eines Teilnehmer-Endgeräts, das die Fernsprechsignalisation verarbeiten kann, wobei die Anordnung die gleichzeitige Übertragung von digitalen Sprach- und Datensignalen ermöglicht, von einem eingebauten Prozessor (14) einer Verwaltungslogik (9) gesteuert wird und ein Mittel (10) zur Übertragung von Daten für den Anschluß eines Informatikgeräts, wie etwa eines Rechners, aufweist, dadurch gekennzeichnet, daß die Einrichtung einen Koppler (4) aufweist, der in den Telefonapparat integriert und mit der Verwaltungslogik (9) dieses Apparats verbunden ist, der mit Einrichtungen zur Ableitung der zur Verwaltungslogik des Apparats übertragenen Fernsprechsignalisation an einen äußeren Anschluß (1A) des Busses des individuellen Rechners und mit Mitteln versehen ist, um auf Wunsch die Fernsprechsignalisation, die der Apparat zur Vermittlungsanlage übertragen müßte, durch eine entsprechende, vom individuellen Rechner erzeugte Signalisation zu ersetzen, wobei die Datenübertragungen, die zu und von diesem individuellen Rechner verlaufen, über diese Datenübertragungsmittel getrennt erfolgen, und daß der individuelle Rechner ausschließlich Softwaremittel zur Erzeugung der Ersatz-Fernsprechsignalisation aufweist, wobei diese über die Stromkreise des Telefonapparats verläuft, die ebenfalls von der vom eingebauten Prozessor dieses Apparats ausgehenden Fernsprechsignalisation benutzt werden.

2. Anschlußanordnung nach Anspruch 1, dadurch gekennzeichnet, daß der Telefonapparat (3), dessen Verwaltungslogik (9) im Kern einen Prozessor (14) mit Speichern besitzt, eine Signalisationshilfseinrichtung (11) aufweist, die im Kern einen Zusatzprozessor (15) enthält, der den Austausch der Fernsprechsignalisation zwischen dem Apparat (3) und dem Rechner (1) durchführen kann und hierzu einerseits an mindestens einen Rechnerbusstecksatz (4A1 bzw. 4A2), und andererseits an den Prozessor (14) der Verwaltungslogik des Apparats für die Übertragung der Signalisation angeschlossen ist.

3. Anschlußanordnung nach mindestens einem der Ansprüche 1 und 2, dadurch gekennzeichnet, daß sie einen physisch vom Rechner (1) getrennten Telefonapparat (3) aufweist, der funktionell als mit Hilfe der üblichen Befehle des Rechners direkt betätigbares Zusatzgerät in den Rechner inkorporiert ist.

4. Einrichtung für den Anschluß eines individuellen Rechners (1) an ein Fernsprechnetz (2) mit Hilfe einer digitalen Vermittlungsanlage, insbesondere einer Nebenstellenanlage (13), über einen Telefonapparat (3), die eine gleichzeitige Übertragung von digitalen Sprach- und Datensignalen ermöglicht und von einem eingebauten Prozessor gesteuert wird, wobei der Apparat Datenübertragungsmittel (10, 4B) für den Anschluß eines Informatikgeräts, wie etwa eines Rechners, aufweist, dadurch gekennzeichnet, daß die Einrichtung einen Koppler (4) aufweist, der in den Telefonapparat integriert und mit der Verwaltungslogik (9) dieses Apparats verbunden ist und mit Einrichtungen zur Ableitung der zur Verwaltungslogik des Apparats übertragenen Fernsprechsignalisation an einen äußeren Anschluß (1A1 oder 1A2) des Busses des individuellen Rechners, und mit Mitteln versehen ist, um die Fernsprechsignalisation, die der Apparat zur Vermittlungsanlage übertragen müßte, durch eine entsprechender vom individuellen Rechner erzeugte Signalisation zu ersetzen, der hierzu entsprechend programmiert ist, wobei die Datenübertragungen zum und vom Rechner, die über die Selbstwählvermittlungszentrale verlaufen, über die Datenübertragungsmittel (10, 4B) getrennt erfolgen.

5. Anschlußeinrichtung nach Anspruch 4, dadurch gekennzeichnet, daß der Telefonapparat (3), dessen Verwaltungslogik (9) im Kern einen Prozessor (14) mit Speichern enthält, einen Koppler (4) aufweist, der einen von einem Steckplatz (4B) für den Datenaustausch mit dem Rechner (1) bedienten Durchsatzwandler (10) mit einer Signalisationshilfseinrichtung (11) kombiniert, die im Kern einen Zusatzprozessor (15) enthält, der das Austauschen der Fernsprechsignalisation zwischen dem Apparat (3) und dem Rechner (1) durchführen kann und hierzu einerseits an mindestens einen Rechnerbussteckplatz (4A1 bzw. 4A2) und andererseits an den Prozessor (14) der Verwaltungslogik des Apparats für die Übertragung der Signalisation angeschlossen ist.

6. Anschlußeinrichtung nach Anspruch 5, dadurch gekennzeichnet, daß der Zusatzprozessor (15) der Anschlußanordnung mit dem Prozessor (14) des Telefonapparats parallel an die Telefonleitung (5) des Apparats über einen gemeinsamen Multiplexer-Demultiplexer (6) und eine gemeinsame Leitungsschnittstelle (7) angeschlossen ist.
